Europäisches Patentamt

European Patent Office

Office européen des brevets

(11) Veröffentlichungsnummer: **0 133 276**
A2

(12) **EUROPÄISCHE PATENTANMELDUNG**

(21) Anmeldenummer: **84108736.4**

(22) Anmeldetag: **24.07.84**

(51) Int. Cl.⁴: **F 03 B 13/12**

(30) Priorität: **30.07.83 DE 3327539**

(43) Veröffentlichungstag der Anmeldung: **20.02.85**
**Patentblatt 85/8**

(84) Benannte Vertragsstaaten: **BE CH FR GB LI LU NL SE**

(71) Anmelder: **Spiess, Walter, Frankengut 3,
D-8580 Bayreuth (DE)**

(72) Erfinder: **Spiess, Walter, Frankengut 3, D-8580 Bayreuth
(DE)**

(74) Vertreter: **LOUIS, PÖHLAU, LOHRENTZ & SEGETH,
Kesslerplatz 1, D-8500 Nürnberg (DE)**

(54) **Vorrichtung zur Umwandlung der Energie von Meereswellen.**

(57) Vorrichtung zur Umwandlung der Energie von Meereswellen, mit mindestens einem gegen Wellenbrecher geschützten, als Behälter ausgebildeten, mit einem Generator gekoppelten Schwimmkörper (2), der beispielsweise mit soviel Ballastmaterial gefüllt ist, daß er gerade an der Wasseroberfläche schwimmend gehalten ist. Dabei weist der vorzugsweise in einem Hohlkörper (6) vertikal bewegliche Schwimmkörper (2) eine Höhe ($H_{Sch}$) auf, die im Bereich zwischen der mittleren und der maximalen am Standort der Vorrichtung auftretenden Wellenhöhe ($H_W$) der Meereswellen liegt. Der Hohlkörper (6) kann einen Vorbau (7) aufweisen, der die in jeder Welle vorhandene horizontale Geschwindigkeitskomponente in eine Überhöhung der Wassersäule im Hohlraum (6) und in eine entsprechende Erhöhung der Energieausbeute umwandelt.

- 1 -

Vorrichtung zur Umwandlung der
Energie von Meereswellen.

Die Erfindung betrifft eine Vorrichtung zur Umwandlung
der Energie von Meereswellen mit mindestens einem als
Behälter ausgebildeten Schwimmkörper, der in einem Hohlkörper vertikal geführt ist, welcher Öffnungen aufweist,
über die das Innere des Hohlkörpers mit dem umgebenden
Meer verbunden ist, wobei das Eigengewicht des Schwimmkörpers dem Gewicht des von ihm im Ruhezustand des Wassers verdrängten Wasservolumen entspricht, und der
Schwimmkörper mit einem Generator gekoppelt ist, wobei
die Abwärtsbewegung des Schwimmkörpers zur Energiegewinnung genutzt wird.

Eine derartige Vorrichtung ist aus der DE-PS 29 33 330
bekannt, wobei eine optimale Leistungsausbeute dadurch
erzielt wird, daß die vertikal bewegbar gelagerten
Schwimmkörper, die von den Wellen aufwärts bewegt werden,
über je ein Übertragungssystem und je eine Kupplung bei
ihrer Abwärtsbewegung den gemeinsamen Stromerzeuger antreiben. Dabei kann die Abwärtsbewegung des Schwimmkörpers durch eine Haltevorrichtung verzögert werden, bis
sich die Welle um einen Teil Ihrer Wellenperiode abgesenkt hat.

Eine Vorrichtung zum Umwandeln der Energie von Mereswellen mit einem Schwimmkörper, der wenigstens teilweise in das Wasser eintaucht und mechanisch mit einem ortsfesten Bezugspunkt verbunden ist, ist aus der DE-OS 28 12 618 bekannt. Diese Vorrichtung umfaßt zwischen dem Schwimmkörper und dem Bezugspunkt einen Verriegelungsmechanismus, der den Schwimmkörper wenigstens annähernd relativ zum Bezugspunkt während bestimmter Zeitperioden einer Wellenschwingung hält, die auf die Vorrichtung einwirkt.

Mit derartigen Verzögerungen ist es möglich, nicht nur die vertikale, durch die Meereswellen gegebene Schwingung in Energie umzuwandeln, sondern diese vertikale Schwingungsenergie noch durch die Gravitationswirkung zu verstärken und so die Energieausbeute zu erhöhen.

Weder in der zuerst genannten DE-PS 29 33 330, noch in der zuletzt genannten DE-OS 28 12 618 ist jedoch etwas über die Dimensionierung des gerade an der Wasseroberfläche schwimmend gehaltenen Schwimmkörpers ausgesagt, so daß die Ausnutzung der Wellenenergie bei verschieden hohen, bzw. bei sehr hohen Wellen nicht optimal ist.

Deshalb liegt der vorliegenden Erfindung die Aufgabe zugrunde, eine Vorrichtung der eingangs genannten Art derart weiterzubilden, daß die in Meereswellen latente Energie noch besser umgewandelt wird.

Diese Aufgabe wird erfindungsgemäß dadurch gelöst, daß der Schwimmkörper eine konstante Höhe aufweist, die im Bereich zwischen der mittleren und maximalen am Standort der Vorrichtung auftretenden Höhe der Meereswellen liegt.

Die mit der Erfindung erzielten Vorteile bestehen insbesondere darin, daß mit einer derartig dimensionierten Vorrichtung d.h. insbesondere mit einem derartig dimensionierten Schwimmkörper die am Standort der Vorrichtung auftretenden Wellenhöhen energetisch optimal ausgenutzt und in eine transportable Energieform, beispielsweise in elektrische Energie umgewandelt werden.

Bei einer vorteilhaften Weiterbildung der Erfindung weist der Schwimmkörper eine Höhe auf, die der maximalen, örtlich auftretenden Wellenhöhe entspricht, so daß auch derartige maximale Wellenhöhen optimal in ein Maximum an transportabler Energie umgewandelt werden können, wobei die erfindungsgemäße Vorrichtung gleichzeitig in vorteilhafter Weise in der Lage ist, derartigen höchsten Wellen stand zu halten, wie noch weiter unten ausgeführt wird.

Um das Verhältnis zwischen Anlagekosten der erfindungsgemäßen Vorrichtung und Energieausbeute in einem realisierbaren Rahmen zu halten, weist der Schwimmkörper bevorzugt eine Höhe auf, die zwischen dem 1,3-fachen und dem 0,2-fachen der maximalen, örtlich auftretenden Wellenhöhe liegt. Um einen relativ weiten Bereich ortlich möglicher maximaler Wellenhöhen optimal auszunutzen, liegt die Höhe des Schwimmkörpers vorzugsweise zwischen 0,5m und 10m, so daß maximale Wellenhöhen in diesem Bereich voll ausgenutzt werden. In den meisten Einsatzfällen ist es ausreichend, die Höhe des Schwimmkörpers zwischen 1 m und 5m zu dimensionieren, weil auch in Gebieten mit größerer maximalen Wellenhöhe derartige Maxima nur während einer relativ kurzen Zeitspanne auftreten, so daß die Investitionskosten in keinem angemessenen Verhältnis zur möglichen, höheren Energieausbeute stehen würden.

Insbesondere zum Brandungsschutz eines Schwimmkörpers ist bei einer bevorzugten Weiterbildung der Erfindung der Schwimmkörper in einem oben und unten offenen, aus der Meeresoberfläche herausragenden Hohlkörper vertikal frei beweglich angeordnet. Durch die kommunizierende Wirkung im unten offenen Hohlraum gleicht sich die Wassersäule im Hohlraum ständig dem äußeren Meeresspiegel an, so daß der Schwimmkörper eine den Meereswellen entsprechende vertikale Bewegung ausführt.

Da in einer Meereswelle nicht nur eine aus der vertikalen Auf- und Abbewegung resultierende Bewegungsenergie vorhanden ist, sondern auch in der Horizontalbewegung der Welle, weist der Hohlraum bei einer selbständige Bedeutung besitzenden Weiterbildung der Erfindung einen stirnseitig offenen, mit dem Hohlraum verbundenen Vorbau auf, dessen Seitenwände durch frontale, schräg nach oben gerichtete Leitbleche miteinander verbunden sind. Mit einem derartigen erfindungsgemäßen Vorbau wird die in einer Meereswelle stets vorhandene horizontale Bewegung in eine zusätzliche Überhöhung der Wassersäule im Vorbau und durch die kommunizierende Wirkung des mit dem Vorbau strömungstechnisch verbundenen Hohlkörpers in eine entsprechende Überhöhung der Wassersäule im Hohlkörper umgewandelt. Dadurch daß der Vorbau auf der Seite der ankommenden Welle von unten bis oben offen ist, ergibt sich aus der horizontalen Komponente einer Welle ein über den ganzen Vorbau wirksam werdender Flächendruck und werden insbesondere die starken Oberflächenströmungen ständig voll erfaßt und in eine Überhöhung der Wassersäule umgesetzt. Diese Überhöhung der Wassersäule im Hohlkörper bedeutet jedoch eine entsprechende Anhebung und somit eine vorteilhafte Erhöhung der potentiellen Energie des Schwimmkörpers, die in kinetische Energie und im Kraftwerk in eine transportable Energie, beispielsweise in elektrische Energie umgewandelt wird.

Um die in einer Meereswelle stets vorhandene horizontale Bewegung optimal zur Überhöhung der Wassersäule im Vorbau und damit im Hohlkörper auszunutzen, weist der Vorbau eine an den Hohlkörper angrenzende Rückenfläche auf, die nach oben zum Hohlkörper hin schräg verlaufend ausgebildet ist.

Bei einer Weiterbildung der Erfindung ist der Vorbau durch eine unter dem Vorbau angeordnete Öffnung mit dem Hohlraum verbunden, so daß die kommunizierende Wirkung zwischen dem Vorbau und dem Hohlkörper uneingeschränkt gegeben ist.

Zur weiteren Verbesserung der kommunizierenden Wirkung ist bei einer bevorzugten Weiterbildung der Erfindung der Vorbau durch in seiner Rückenfläche, vorzugsweise neben den Seitenwänden, angeordnete Schlitze mit dem Hohlraum verbunden.

Bei einer Weiterbildung der Erfindung ist der Vorbau um die vertikale Längsachse des Hohlkörpers drehbar angeordnet, so daß sich der Vorbau ständig in die Richtung der horizontalen Strömungskomponente einstellt und damit jederzeit eine Überhöhung der Wassersäule im Hohlraum und eine Erhöhung der Energieausbeute ergibt. Dabei weist bei einer erfindungsgemäßen Ausführungsform der Vorbau eine sich in die horizontale Strömungsrichtung einstellende Leiteinrichtung auf.

Erfindungsgemäß können eine Anzahl Hohlkörper, die für die Schwimmkörper gleichzeitig einen äußerst wirksamen Brandungsschutz darstellen, eine Plattform mit der Kraftwerksanlage tragen. Die Hohlkörper sind bei einer Weiterbildung der Erfindung aufeinandergestellte, Spalte aufweisende Betonringe. Um Unebenheiten des Meeresbodens auszugleichen und um die Standfläche zu vergrößern, sind die Betonringe bei einer weiteren Ausführungsform der Erfindung am Meeresboden mit Beton ausgegossen. Zur statischen Verstärkung jedes einzelnen Hohlraumes sind die Betonringe bei einer weiteren Ausbildung der Erfindung mit Füllmaterial aufgefüllt, das bis zur Arbeitshöhe, d.h. bis in die Nähe des möglichen Tiefststandes des Schwimmkörpers reicht.

Weitere Einzelheiten, Merkmale und Vorteile der
Erfindung ergeben sich aus der nachfolgenden Beschreibund von in der Zeichnung schematisch dargestellten Ausführungsbeispielen, wobei zur besseren Verdeutlichung der möglichen Energiegewinnung auch
einige Zahlenbeispiele durchgerechnet werden. Es
zeigen:

Fig. 1 sich entsprechende Hohlkörper mit in den
        beiden Extrempositionen befindlichen Schwimmkörpern,

Fig. 2 sich entsprechende, einen Vorbau aufweisende
        Hohlkörper mit in den beiden Extrempositionen
        befindlichen Schwimmkörpern,

Fig. 3 eine Draufsicht auf einen einen Vorbau aufweisenden Hohlkörper gemäß Fig. 2 und

Fig. 4 eine der Fig. 3 entsprechende Draufsicht
        mit zwei im Hohlkörper nebeneinander befindlichen Schwimmkörpern.

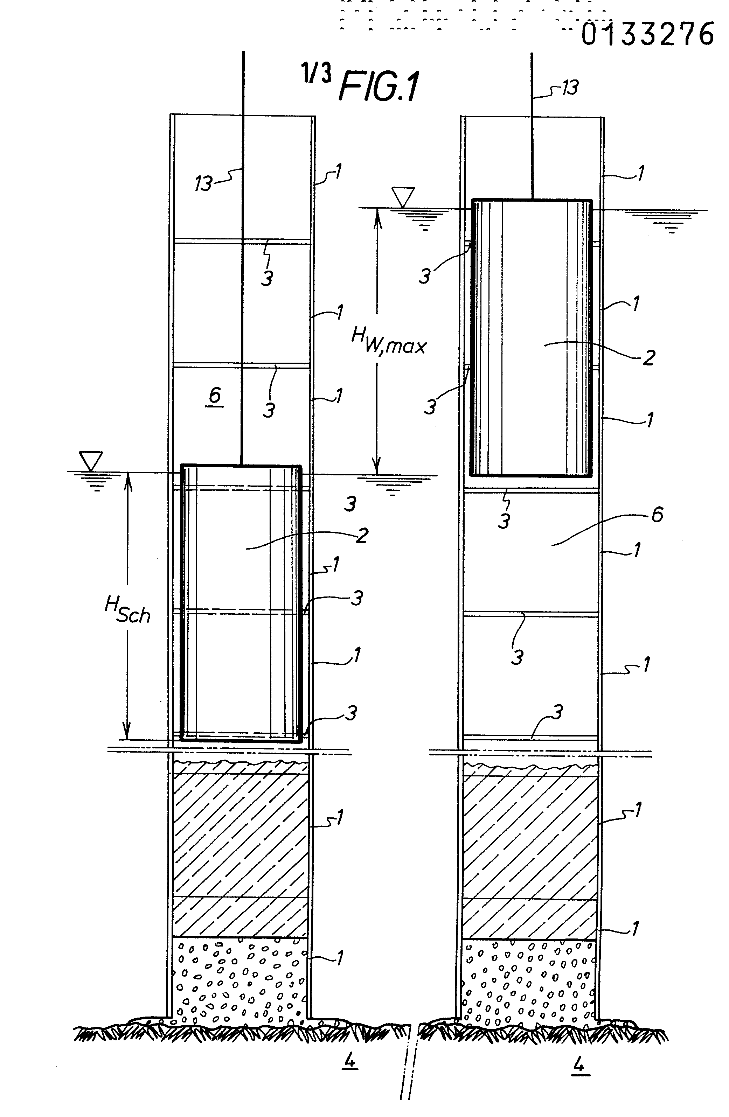

Figur 1 zeigt auf der linken Seite einen auf dem
Meeresgrund 4 stehenden Hohlkörper 6, der aus Betonrohren 1 aufgebaut ist. Die Betonrohre 1 weisen
Spalte 3 ausreichender Größe auf, so daß der im
Hohlkörper 6 befindliche und über einen Seilzug
13 mit dem Kraftwerk verbundene Schwimmkörper 2
vertikal frei beweglich geführt ist und sich im
Hohlkörper 6 die Wassersäule und damit der Schwimmkörper 2 den jeweiligen äußeren Verhältnissen
unverzüglich anpassen kann. Der als Behälter ausgebildete Schwimmkörper 2 ist mit soviel Ballastmaterial gefüllt, daß er gerade an der Wasseroberfläche schwimmend gehalten ist. Auf der linken
Seite der Figur 1 ist der Schwimmkörper 2, dessen
Höhe $H_{Sch}$ der maximalen, örtlich auftretenden
Wellenhöhe $H_{W,max}$ entspricht, in der tiefstmöglichen
Position, d.h. im Wellental dargestellt. Auf der
rechten Seite dieser Figur ist der Schwimmkörper
2 in der dem Wellenberg entsprechenden Position,
d.h. um den Betrag $H_{W,max}$ angehoben dargestellt,
so daß er hier eine potentielle Energie entsprechend
der Formel

$$W(H_W) = 9{,}81 \cdot 10^3 \cdot A \cdot H_W{}^2 \quad \text{und}$$

$$W_{max} = 9{,}81 \cdot 10^3 \cdot A \cdot H_{W,max}$$

besitzt. Dabei bedeuten W = potentielle Energie des Schwimmkörpers in Ws
A = Grundfläche des Schwimmkörpers in $m^2$
$H_{W,max}$ = örtliche maximale Wellenhöhe in m.
Da die Höhe $H_{Sch}$ des Schwimmkörpers 2 der örtlich
auftretenden Wellenhöhen $H_W$ angepaßt ist, und insbesondere eine Höhe $H_{Sch}$ aufweist, die der maximalen,
örtlich auftretenden Wellenhöhe entspricht, ergibt
sich für ein erstes Ausführungsbeispiel folgendes:

Ausführungsbeispiel 1:
-----------------------

Der Schwimmkörper 2 weist die folgenden Dimensionen
auf: Grundfläche A = 5 m x 10 m = 50 $m^2$
Höhe $H_{Sch}$ = 10 m.

Das Kraftwerk sei in der Nordsee installiert und
soll 50 derartige Schwimmkörper 2 umfassen.

Aus den Unterlagen des deutschen hydrographischen Institutes Hamburg "Die Nordsee" sind die folgenden Daten zu entnehmen: Bei einer Wellenhöhe $H_W$= 2m beträgt die Periodendauer einer Welle T = 6 sec und bei einer Wellenhöhe $H_W$ = 5 m beträgt die Periodendauer T = 11 sec. Daraus ergibt sich die Leistung pro Schwimmkörper in kW wie folgt:

$$P (H_W) = \frac{W(H_W)}{T(H_W)} = 9{,}81 \cdot \frac{A \cdot H_W^2}{T(H_W)} \quad \text{und}$$

$$P (2m) = 9{,}81 \; \frac{50.4}{6} = 327 \text{ kW} \quad \text{bzw.}$$

$$P (5m) = 9{,}81 \; \frac{50.25}{11} = 1115 \text{ kW}$$

Mit fünfzig derartigen Schwimmkörpern 2 ergibt sich damit eine theoretische Kraftwerksleistung:

$$P_{ges} (2m) = 16 \text{ MW} \quad \text{bzw.}$$
$$P_{ges} (5m) = 55 \text{ MW.}$$

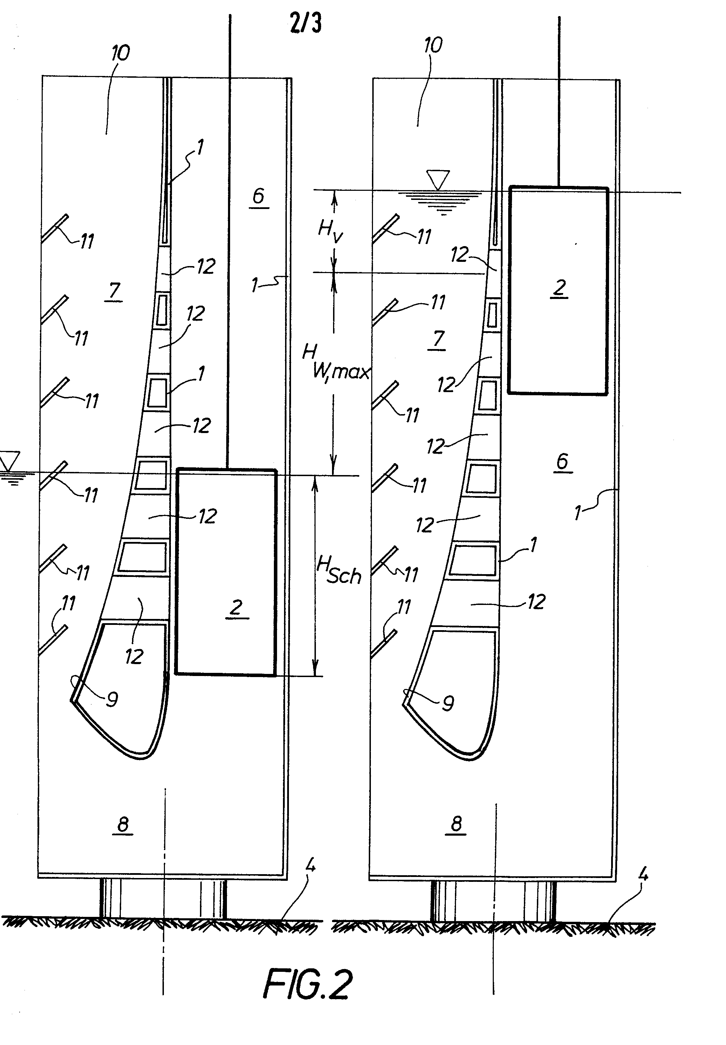

Figur 2 zeigt einen Hohlkörper 6 mit einem Vorbau 7, welche miteinander durch eine Öffnung 8 verbunden sind. Der Vorbau 7 ist entlang seiner gesamten Höhe stirnseitig offen und seitlich durch Seitenwände 10 begrenzt. Die beiden Seitenwände 10 sind durch frontale, schräg nach oben gerichtete Leitbleche 11 miteinander mechanisch stabil verbunden. Die der Wandung 1 des Hohlraumes 6 benachbarte Rückenfläche 9 des Vorbaus 7 ist nach oben schräg verlaufend ausgebildet. Diese geradlinige oder gekrümmte Rückenfläche 9 und die frontalen, schräg nach oben gerichteten Leitbleche 11 lenken die in jeder Meereswelle vorhandene, horizontale Geschwindigkeitskomponente in eine vertikale Geschwindigkeitskomponente um, welche im Vorbau zu einer zum Quadrat der vertikalen Geschwindigkeitskomponente proportionalen Überhöhung $H_v$ führt. Auf der rechten Seite dieser Figur ist der Schwimmkörper 2 in der gehobenen Position dargestellt, die sich aus der maximalen Wellenhöhe $H_{W,max}$ und der Überhöhung $H_v$ ergibt. Diese von der Anström-Geschwindigkeit abhängige Überhöhung kann in der Größenordnung von 30 cm pro 1 m Höhe des Vorbaues 7 liegen. Durch die Verbindung des Vorbaues 7 über die Öffnung 8 zum Hohlkörper 6, und die dadurch mögliche kommunizierende Wirkung folgt die Wassersäule im Hohlraum 6 unverzüglich der Wassersäule im Vorbau 7, so daß der Schwimmkörper 2 nicht nur auf die maximale Wellenhöhe $H_{W,max}$ sondern noch darüberhinaus auf die Überhöhung $H_v$ hochgehoben wird. Um die kommunizierende Wirkung noch besser auszunutzen, können seitlich in der Nähe der Seitenwände 10 in der Rückenfläche 9 eine Anzahl Längskanäle 12 angeordnet sein, welche zwischen dem Vorbau 7 und dem Hohlraum 6 eine Verbindung herstellen.

Auf einer Höhe $H_W + H_v = 1,3 \cdot H_W$ hat der Schwimmkörper 2 eine potentielle Energie

$$W(H_W + H_v) = 9,81 \cdot 10^3 \cdot A \cdot (1,3 H_W)^2.$$

Damit ergibt sich für ein dem ersten Ausführungsbeispiel entsprechendes zweites Ausführungsbeispiel folgendes:

Ausführungsbeispiel 2:
------------------------

Der Schwimmkörper 2 weist die gleichen Dimensionen auf, wie der des Ausführungsbeispieles 1. Auch das Kraftwerk entsprechend dem Ausführungsbeispiel 2 wird bei gleicher Standortannahme mit den gleichen Wellenparametern durchgerechnet. Dabei ergibt sich die Leistung pro Schwimmkörper in kW wie folgt:

$$P(H_w + H_v) = \frac{W(H_w + H_v)}{T(H_w)} = 16,58 \cdot A \cdot \frac{H_w^2}{T(H_w)} \quad \text{und}$$

$$P(2m) = 16,58 \cdot \frac{50.4}{6} = 552 \text{ kW} \quad \text{bzw.}$$

$$P(5m) = 16,58 \cdot \frac{50.25}{11.} = 1884 \text{ kW}$$

Mit fünfzig derartigen Schwimmkörpern ergibt sich damit eine theoretische Kraftwerksleistung

$$P_{ges}(2m) = 27,6 \text{ MW}$$

$$P_{ges}(5m) = 94,2 \text{ MW}.$$

Wie aus diesen Ausführungsbeispielen ersichtlich ist, ergibt sich mit einem derartigen, mit dem Hohlkörper 6 kommunizierend verbundenen Vorbau 7 nocheinmal eine erhebliche Leistungssteigerung von ca. 70% ohne wesentliche Erhöhung des Anlage-Investitionsaufwandes.

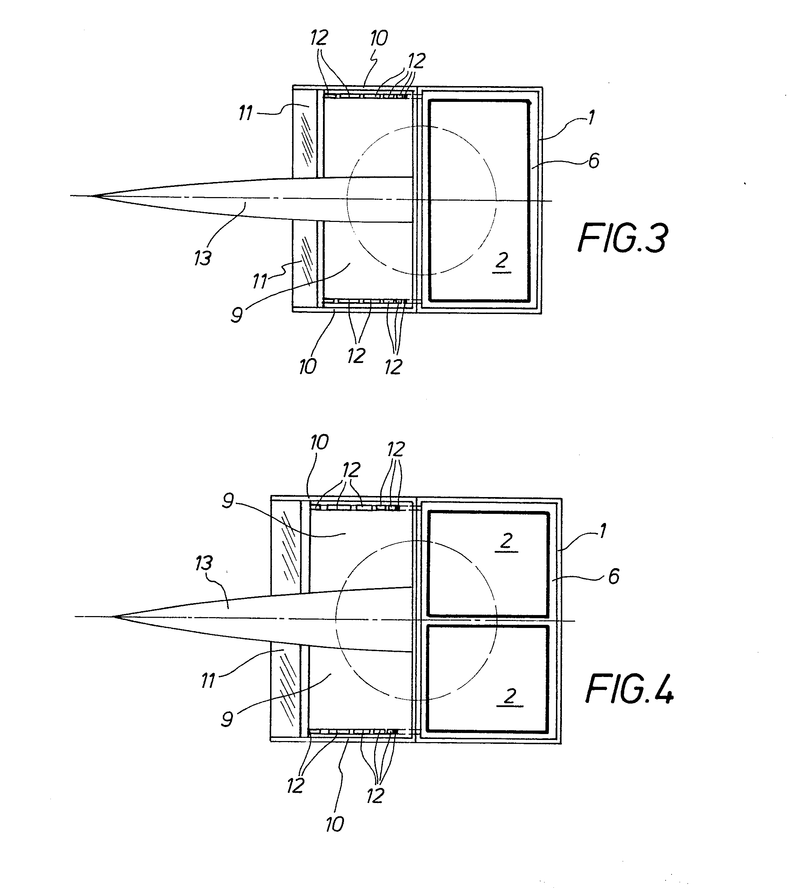

Die Figuren 3 und 4 zeigen je einen Hohlkörper 6, in dem ein Schwimmkörper 2 (Fig. 3), bzw. in dem bei großen Querschnittsabmessungen zwei Schwimmkörper 2 (Fig. 4) nebeneinander angeordnet sind. An die Wandung 1 rechteckigen Querschnittes sind auf der Vorderseite zwei Seitenwände 10 angeformt, die stirnseitig durch zueinander parallele, schräg gestellte Leitbleche 11 miteinander mechanisch fest verbunden sind. Der Vorbau 9 weist ein Leitwerk 13 auf, so daß sich die um eine vertikale Achse drehbar gelagerte Vorrichtung stets in Richtung einer horizontalen Strömungskomponente einer Welle einstellt und diese Strömungsenergie zusätzlich in potentielle Energie umwandelt. In der Rückenfläche 9 des Vorbaus 7 sind seitlich Längsschlitze 12 vorhanden, um die kommunizierende Wirkung zwischen dem Vorbau 7 und dem Hohlkörper 6 zu optimieren.

- 1 -

Ansprüche:

1. Vorrichtung zur Umwandlung der Energie von Meereswellen mit mindestens einem als Behälter ausgebildeten Schwimmkörper, der in einem Hohlkörper vertikal
geführt ist, welcher Öffnungen aufweist, über die
das Innere des Hohlkörpers mit dem umgebenden Meer
verbunden ist, wobei das Eigengewicht des Schwimmkörpers dem Gewicht des von ihm im Ruhezustand des
Wassers verdrängten Wasservolumens entspricht und der
Schwimmkörper mit einem Generator gekoppelt ist, wobei die Abwärtsbewegung des Schwimmkörpers zur Energiegewinnung genutzt wird,
d a d u r c h   g e k e n n z e i c h n e t,
daß der Schwimmkörper (2) eine konstante Höhe aufweist, die im Bereich zwischen der mittleren und
der maximalen am Standort der Vorrichtung auftretenden Wellenhöhe der Meereswellen liegt.

2. Vorrichtung nach Anspruch 1, dadurch gekennzeichnet, daß der Hohlkörper (6) zur vertikalen Führung des Schwimmkörpers (2) einen durch zwei Seitenwände (10) begrenzten und auf der dem Hohlkörper (6) gegenüberliegenden Vorderseite offenen Vorbau (7) aufweist, wobei die beiden Seitenwände (10) mit dem Hohlkörper (6) und miteinander auf der Vorderseite durch frontale, schräg nach oben gerichtete Leitbleche (11) verbunden sind.

3. Vorrichtung nach Anspruch 2, dadurch gekennzeichnet, daß der Vorbau (7) eine an den Hohlkörper (6) angrenzende Rückenfläche (9) aufweist, die nach oben und zum Hohlkörper (6) hin schräg verlaufend ausgebildet ist.

4. Vorrichtung nach einem der Ansprüche 1 bis 3, dadurch gekennzeichnet, daß der Vorbau (7) durch eine unter dem Vorbau (7) angeordnete Öffnung (8) mit dem Inneren des Hohlkörpers (6) verbunden ist.

5. Vorrichtung nach einem der Ansprüche 2 bis 4, dadurch gekennzeichnet, daß der Vorbau (7) durch in seiner Rückenfläche neben den Seitenwänden (10) angeordnete Schlitze (12) mit dem Inneren des Hohlkörpers (6) verbunden ist.

6. Vorrichtung nach einem der Ansprüche 2 bis 5, dadurch gekennzeichnet, daß der Hohlkörper (6) mit dem Vorbau (7) um die vertikale Längsachse des Hohlkörpers drehbar angeordnet ist.

7. Vorrichtung nach einem der Ansprüche 2 bis 6, dadurch gekennzeichnet, daß der Vorbau (7) eine sich in die horizontale Strömungsrichtung der Meereswellen einstellende Leiteinrichtung (13) aufweist.

8. Vorrichtung nach einem der vorhergehenden Ansprüche, dadurch gekennzeichnet, daß der Hohlkörper (6) aus aufeinandergestellten, Spalte (3) aufweisenden Betonringen (1) besteht.

0133276

*FIG.1*

0133276

FIG.2

*FIG.3*

*FIG.4*